Europäisches Patentamt

European Patent Office

Office européen des brevets

(19)

(11) **EP 0 927 870 A2**

(12) **EUROPÄISCHE PATENTANMELDUNG**

(43) Veröffentlichungstag:
**07.07.1999 Patentblatt 1999/27**

(51) Int. Cl.⁶: **G01B 11/24**

(21) Anmeldenummer: **98124162.3**

(22) Anmeldetag: **19.12.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.12.1997 DE 19757791**

(71) Anmelder:
**Deutsches Zentrum für Luft- und Raumfahrt e.V**
**53127 Bonn (DE)**

(72) Erfinder:
• **Baumann, Peter Dr.**
  **37075 Göttingen (DE)**
• **Grauer-Carstensen, Helmut**
  **37077 Göttingen (DE)**
• **Habermalz, Ulf**
  **37075 Göttingen (DE)**

(74) Vertreter:
**Patentanwälte Rehberg + Hüppe**
**Am Kirschberge 22**
**37085 Göttingen (DE)**

(54) **Moiré-Verfahren und Moiré-Vorrichtung zum Vermessen einer Oberfläche**

(57)     Bei einem Moiré-Verfahren zum Vermessen einer Oberfläche und einer Moiré-Vorrichtung zur Durchführung des Verfahrens wird ein periodisches Hellgitter aus beabstandeten und parallel zueinander verlaufenden hellen Streifen auf die Oberfläche (11) projiziert und das auf die Oberfläche (11) projizierte Hellgitter ohne Zwischenordnung eines körperlich vorhandenen Dunkelgitters unter einem Abbildungsmaßstab auf einen Photosensor (31) abgebildet, der in in Zeilen und Spalten angeordnete Bildpunkte aufgeteilt ist. Dabei werden die Streifen des Hellgitters parallel zu den Zeilen oder Spalten des Photosensors ausgerichtet, und der Abbildungsmaßstab wird so gewählt, daß der Abstand der Streifen des auf den Photosensor abgebildeten Hellgitters gleich groß ist wie ein n-facher Abstand der Zeilen bzw. Spalten, wobei n eine positive ganze Zahlen ist.

Fig. 4

**Beschreibung**

Die Erfindung bezieht sich auf ein Moiré-Verfahren zum Vermessen einer Oberfläche nach dem Oberbegriff des Anspruchs 1 und auf eine Moiré-Vorrichtung zum Vermessen einer Oberfläche gemäß dem verfahren nach dem Oberbegriff des Anspruchs 5.

Bei einem klassischen Moiré-Verfahren wird ein Dunkelgitter von hinten mit einer Lichtquelle beleuchtet, wobei das Dunkelgitter das von der Lichtquelle kommende Licht bis auf ein Hellgitter ausblendet. Dieses Hellgitter wird mit einem ersten Objektiv auf die zu vermessende Oberfläche projiziert. Mit einem zweiten Objektiv wird das auf die Oberfläche projizierte Gitter auf ein zweites Dunkelgitter abgebildet. Das zweite Dunkelgitter entspricht dabei, wenn auch die beiden Objektive übereinstimmen, vorteilhafterweise dem ersten Dunkelgitter, das zur Erzeugung des Hellgitters verwendet wird. Das heißt, es weist vorzugsweise dieselbe Gitterkonstante auf und, wenn das Hellgitter auf eine parallel zu den Dunkelgittern verlaufende Oberfläche projiziert wird, fallen seine hellen Streifen genau auf die Freiräume des zweiten Dunkelgitters. Jede Kontur der Oberfläche führt dann zu einer Verzerrung des Hellgitters gegenüber dem zweiten Dunkelgitter, die in ein Interferenzmuster resultiert. In dem voranstehend skizzierten Idealfall weist das Interferenzmuster Linien auf, die direkt Höhenlinien auf der zu vermessenden Oberfläche entsprechen. Die Vorteile eines Moiré-Verfahrens sind, daß keine besondere Präparation der zu vermessenden Oberfläche notwendig ist, daß die Vermessung der Oberfläche kontaktlos erfolgt und auch aus größerer Entfernung möglich ist, daß ein flächiges Bild der Kontur der Oberfläche erhalten wird, und daß die Genauigkeit der Vermessung im Vergleich zu der dabei eingehaltenen Entfernung zu der Oberfläche verhältnismäßig groß ist. In der Praxis stellt sich jedoch als nachteilig heraus, daß einer sich aus der Überlagerung des Hellgitters und des zweiten Dunkelgitters ergebenden Dreiecksfunktion ein von dem lokalen Lichtreflektionsvermögen der Oberfläche und anderen Faktoren abhängiger Lichtintensitätsuntergrund überlagert ist, der die Auswertung eines einzelnen Interferenzmusters durch eine Bildverarbeitung stark erschwert. Nachteilig ist weiterhin, daß aus den registrierten Lichtintensitäten eines einzigen Interferenzmusters die Richtungen der Konturen der Oberfläche nicht entnehmbar sind. Das heißt, daß beispielsweise eine Wölbung nicht von einer entsprechenden Vertiefung in der Oberfläche unterschieden werden kann.

Aus dem Artikel "Automatic on-line measurements of 3-D shape by shadow casting Moiré topography" [Reid et al., Wear, 109, Seiten 297 bis 304 (1986)] ist ein Moiré-Verfahren bekannt, bei dem nach jeweiliger Phasenverschiebung eines der Dunkelgitter mindestens drei Interferenzmuster zu derselben zu vermessenden Oberfläche aufgenommen werden. Aus Betrag und Richtung der Phasenverschiebung des Dunkelgitter und den einzelnen Interferenzmustern lassen sich dann auch die Richtungen von Konturen der Oberfläche ermitteln. Das bekannte Verfahren ist jedoch nur dann durchführbar, wenn sich die Oberfläche zwischen den einzelnen Aufnahmen der Interferenzmuster nicht verändert, d. h. wenn genügend Zeit für die Phasenverschiebung des Dunkelgitters besteht.

Aus dem Artikel "Phase shift method based on object translation for full field automatic 3-D surface reconstructions from Moiré topograms" [Dirckx et al., Applied Optics, 27, 6, Seiten 1164 bis 1169 (1988)] ist ein Moiré-Verfahren zum Vermessen von Oberflächen bekannt, bei dem die Oberfläche zwischen der Aufnahme einzelner Interferenzmuster einer Translation unterworfen wird. Hier sind ebenfalls insgesamt mindestens drei Interferenzmuster aufzunehmen, wenn hieraus die Richtung von Konturen auf der Oberfläche bestimmt werden sollen. Auch dieses bekannte Verfahren ist nur durchführbar, wenn die Oberfläche keinen Änderungen zwischen oder gar aufgrund der Translationen unterworfen ist.

Bei der Durchführung von Moiré-Verfahren ist die Verwendung von Videokameras zum Aufzeichnen der Interferenzmuster bekannt, die sich hinter dem zweiten Dunkelgitter ergeben. Videokameras weisen einen Photosensor auf, der in in Zeilen und Spalten angeordnete Bildpunkte aufgeteilt ist. Beim Auslesen des Photosensors werden die Bildpunkte zeilenweise hintereinander ausgelesen. Aufgrund der Aufteilung des Photosensors einer Videokamera in einzelne Bildpunkte kann es bei der Aufzeichnung von klassischen Moiré-Interferenzmustern zu einem Moiré-Effekt zweiter Ordnung kommen, d. h. es ergibt sich eine zusätzliche Interferenz des aufgenommenen zweiten Dunkelgitters mit den Bildpunkten des Photosensors. Daher ist es üblich, die Videokamera so anzuordnen und zu justieren, daß es aufgrund ihrer begrenzten Auflösung oder einer gewollten Unschärfe bei der Abbildung des zweiten Dunkelgitters auf den Photosensor zu keinem Moiré-Effekt zweiter Ordnung kommen kann.

Aus der DE 43 14 602 A1 sind eine Moiré-Verfahren nach dem Oberbegriff des Anspruchs 1 und eine Moiré-Vorrichtung nach dem Oberbegriff des Anspruchs 5 bekannt. Dabei ist der Abbildungsmaßstab so gewählt, daß der Abstand der Streifen des auf den Photosensor abgebildeten Hellgitters gleich groß ist wie ein 4-facher Abstand der Zeilen. Der Photosensor wird so betrieben, daß er wechselweise komplementäre Halbbilder ausgibt, die jeweils einen Satz übernächster Zeilen umfassen. Der Satz der bei einen Kalbbild nicht berücksichtigten Zeilen wirkt dabei quasi als Dunkelgitter, wobei genau genommen die Anordnung der berücksichtigten Zeilen selbst das Referenzgitter ausmacht. Innerhalb eines aus zwei Halbbildern bestehenden Vollbilds fallen nacheinander zwei Moiré-Aufnahmen der zu vermessenden Oberfläche an.

Der Erfindung liegt die Aufgabe zugrunde, ein Moiré-Verfahren nach dem Oberbegriff des Anspruchs 1 und eine Moiré-Vorrichtung nach dem Oberbegriff des Anspruchs 5 aufzuzeigen, die zum vollständigen Vermessen von sich schnell verändernden Oberflächen geeignet sind.

Erfindungsgemäß wird diese Aufgabe bei einem Moiré-Verfahren der eingangs beschriebenen Art durch die Merkmale des Anspruchs 1 gelöst.

Im Zusammenhang mit der Erfindung bedeutet die parallele Ausrichtung der Streifen des Hellgitters zu den Zeilen oder Spalten des Photosensors keine absolute Parallelität, da dann in dem Interferenzmuster nur konstante Intensitäten zu beobachten wären. Entscheidend ist vielmehr eine ungefähre Gleichrichtung der Streifen mit den Zeilen bzw. Spalten, die bei einer senkrecht zu der Abbildungsrichtung verlaufenden Oberfläche auf eine absolute Parallelität hinauslaufen kann. Ebenso bedeutet, daß der Abstand der Streifen des auf dem Photosensor abgebildeten Hellgitters gleich groß ist wie ein 4-facher Abstand der Zeilen bzw. Spalten, nur, daß die Abstände bei einer senkrecht zu der Abbildungsrichtung verlaufenden Oberfläche vorzugsweise in genau diesem Verhältnis vorliegen. Selbst bei der senkrecht zu der Abbildungsrichtung verlaufenden Oberfläche sind aber kleine Abweichungen von der Parallelität und bezüglich des Abstands unschädlich.

Bei dem neuen Moiré-Verfahren gibt es kein Dunkelgitter, auf das das Hellgitter von der Oberfläche zur Erzeugung eines Interferenzmusters abgebildet wird. Das Dunkelgitter wird vielmehr mit dem Photosensor simuliert. Das heißt, der als nachteilig empfundene Moiré-Effekt zweiter Ordnung wird zum Moiré-Effekt erster Ordnung und statt des üblichen Moiré-Effekts erster Ordnung an einem körperlich vorhandenen Dunkelgitter zur Erzeugung des die Konturinformationen über die Oberfläche beinhaltenden Interferenzmusters genutzt. Um ausgehend von einem gewöhnlichen Moiré-Verfahren unter Verwendung einer Videokamera zu dem neuen Verfahren zu gelangen, reicht es jedoch nicht aus, das Dunkelgitter vor der Kamera wegzulassen. Vielmehr müssen sowohl die Streifen des Hellgitters im obigen Sinne parallel zu den Zeilen oder Spalten des Photosensors ausgerichtet werden als auch der Abbildungsmaßstab in geeigneter Weise festgelegt werden. Mindestvoraussetzung ist dabei, daß der Abstand der Streifen des auf dem, Photosensor abgebildeten Hellgitters gleich groß ist wie ein 4-facher Abstand der Zeilen bzw. Spalten.

Bei dem neuen Moiré-Verfahren ist es möglich, daß die Bildpunkte des Photosensors in zwei äquivalente Gruppen aufgeteilt werden, wobei die Bildpunkte jeder Gruppe in beabstandeten und parallel zueinander verlaufenden Zeilen bzw. Spalten angeordnet sind, und daß die in den Bildpunkten der einen Gruppe registrierten Lichtintensitäten $I_1(i,j)$ gemäß der nachstehenden Gleichung $I_z$ bzw. $I_s$ in bezügliche eines Lichtintensitätsuntergrunds korrigierte Werte $I_{1k}(i,j)$ umgerechnet werden:

$$I_{1k}(i,j) = 1/4 * (2\ I_1(i,j) - I_2(i-u,j) - I_2(i+u,j)) \qquad (I_z),$$

$$\text{bzw.}$$

$$I_{1k}(i,j) = 1/4 * (2\ I_1(i,j) - I_2(i,j-u) - I_2(i,j+u)) \qquad (I_s),$$

wobei $I_2(i-u,j)$ und $I_2(i+u,j)$ bzw. $I_2(i,j-u)$ und $I_2(i,j+u)$ die in der benachbarten Zeile (i) bzw. Spalte (j) der anderen Gruppe registrierten Lichtintensitäten sind.

Die resultierenden Lichtintensitäten $I_{1k}(i,j)$ sind unabhängig von dem Lichtintensitätsuntergrund, der beispielsweise auf eine unterschiedliche Ausleuchtung und ein unterschiedliches Lichtreflektionsvermögen der zu vermessenden Oberfläche zurückgeht. Dabei können die Lichtintensitäten $I_{1k}(i,j)$ aus einer einzigen Aufnahme des Photosensors gewonnen werden, da alle in der jeweiligen Gleichung I auftretenden Einzelwerte bei jeder Aufnahme mit dem Photosensor gewonnen werden. Der Wert von u, d.h. der Wert des Abzug von bzw. des Zuschlag zu dem jeweiligen Laufindex i bzw. j, um in die benachbarte Zeile bzw. Spalte der anderen Gruppe zu gelangen, ist nicht konstant, sondern beträgt in der einen Richtung 1 und in der anderen Richtung 2.

Wenn die Bildpunkte des Photosensors in vier äquivalente Gruppen aufgeteilt werden, wobei die Bildpunkte jeder Gruppe in beabstandeten und parallel zueinander verlaufenden Zeilen bzw. Spalten angeordnet sind und die in den Bildpunkten registrierten Lichtintensitäten bei der Auswertung zu vier verschiedenen Paarungen von Gruppen mit benachbarten Zeilen bzw. Spalten zusammengefaßt werden, kann eine einzige Aufnahme des Hellgitters mit dem Photosensor als vier Interferenzmuster ausgewertet werden, die jeweils unter einer Phasenverschiebung von 90° aufgenommen wurden. Der besondere Vorteil des neuen Moiré-Verfahrens liegt dann darin, daß alle Lichtintensitäten, die für diese Auswertung zur Verfügung stehen müssen, mit einer einzigen Aufnahme durch den Photosensor gewonnen werden.

Vorzugsweise werden die Streifen des Hellgitters bei der Abbildung auf den Photosensor parallel zu den Zeilen des Photosensors ausgerichtet. Dies hängt mit der üblichen zeilenweisen Auslesung der Lichtintensitäten aus einem Photosensor einer Videokamera, beispielsweise einer CCD-Kamera, zusammen. So ist es besonders einfach, die Lichtintensitäten nach Zeilen zu trennen. Eine saubere spaltenweise Trennung ist demgegenüber um ein vielfaches komplizierter, aber grundsätzlich auch möglich.

Eine Moiré-Vorrichtung der eingangs beschriebenen Art löst die erfindungsgemäße Aufgabe durch die Merkmale des Anspruchs 5.

Auch hier ist es günstiger, wenn die Streifen des Hellgitters parallel zu den Zeilen des Photosensors ausgerichtet sind, bei dem es sich vorzugsweise um den Photosensor einer Videokamera handelt.

Die Erfindung wird im folgenden anhand von Ausführungsbeispielen näher erläutert und beschrieben. Dabei zeigt

Figur 1    das Entstehen von Interferenzmustern bei zwei überlagerten Strichgittern,
Figur 2    ein vergrößerter Ausschnitt aus einem Strichgitter gemäß Figur 1,
Figur 3    die bei der Überlagerung von zwei Strichgittern auftretende Dreiecksfunktion triang [N(x)],
Figur 4    die Moiré-Vorrichtung zum Vermessen einer Oberfläche,
Figur 5    einen Schnitt durch ein mit der Moiré-Vorrichtung gemäß Figur 4 aufgezeichnetes Interferenzmuster vor der Korrektur des Lichtintensitätsuntergrunds,
Figur 6    den Schnitt gemäß Figur 5 nach der Korrektur des Lichtintensitätsuntergrunds,
Figur 7    eine Zuordnung der Bildpunkte des Photosensors gemäß Figur 7 zu vier verschiedenen Gruppen, mit vier unterschiedlichen Zuordnungen der Gruppen zu bestimmten Interferenzmustern.

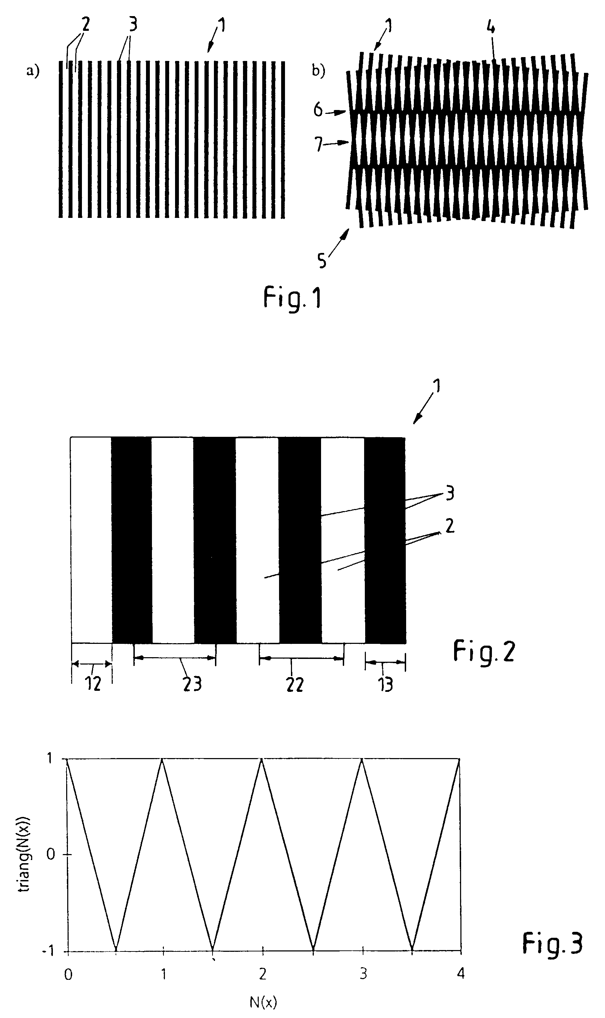

In Figur 1 a) ist ein Strichgitter 1 dargestellt. Das Strichgitter 1 weist helle Streifen 2 und dunkle Streifen 3 auf, die parallel zueinander periodisch angeordnet sind. Wenn das Strichgitter 1, wie in Figur 1 b) dargestellt, mit einem zweiten Strichgitter 4 überlagert wird, ergibt sich ein Interferenzmuster 5 mit dunklen Bereichen 6 und hellen Bereichen 7, sofern die beiden Strichgitter nicht ausschließlich eine lineare Phasenverschiebung zueinander aufweisen. In Figur 1 b) sind die beiden Strichgitter gegeneinander verdreht. Auf dem in Figur 1 skizzierten Effekt basieren sogenannte Moiré-Verfahren zum Vermessen von Oberflächen. Hierbei wird ausgenutzt, daß auf eine nicht senkrecht zur Projektionsrichtung verlaufende Oberfläche projizierte Strichgitter durch die Konturen der Oberfläche verformt werden. Diese Verformungen resultieren bei der Überlagerung mit einem nicht verformten Strichgitter in ein Interferenzmuster mit markanten Höhenlinien.

Figur 2 gibt einen vergrößerten Ausschnitt aus dem Strichgitter 1 gemäß Figur 1 wieder. Dabei ist zu erkennen, daß die hellen Streifen 2 und die dunklen Streifen 3 jeweils gleiche Breiten 12 und 13 und gleiche Abstände 22 und 23 untereinander aufweisen. Das im folgenden zu beschreibende Moiré-Verfahren ist aber auch mit Strichgittern durchführbar, bei denen die Breiten 12 und 13 nicht gleich sind. Gleiche Abstände 22 und 23 sind aber die Regel.

Die Lichtintensitätsverteilung quer zu den hellen Bereichen 7 und den dunklen Bereichen 6 eines Interferenzmusters von zwei überlagerten Strichgittern gehorcht einer Dreiecksfunktion triang [N(x)], wie sie in Figur 3 über N(x), der sogenannten Interferenzordnungsfunktion dargestellt ist, die angibt, um wie viele Perioden Projektions- und Referenzgitter gegeneinander verschoben sind. Die Lichtintensitäten sind über eine Periode des Referenzgitters quer zur Streifenrichtung integriert und dann interpoliert.

Bei der tatsächlichen Durchführung eines Moiré-Verfahrens wird die registrierte Lichtintensität I(x,y) jedoch noch von anderen Werten beeinflußt. So gilt:

$$I(x,y) = I_o(x,y) \text{ triang } [N(x,y)] + B(x,y).$$

Dabei ist $I_o(x,y)$ die Intensität der auf das Referenzgitter abgebildeten hellen Streifen des durch die Oberfläche verformten Hellgitters und B(x,y) der Lichtintensitätsuntergrund, der durch unterschiedliche Ausleuchtung einer Oberfläche zustande kommt.

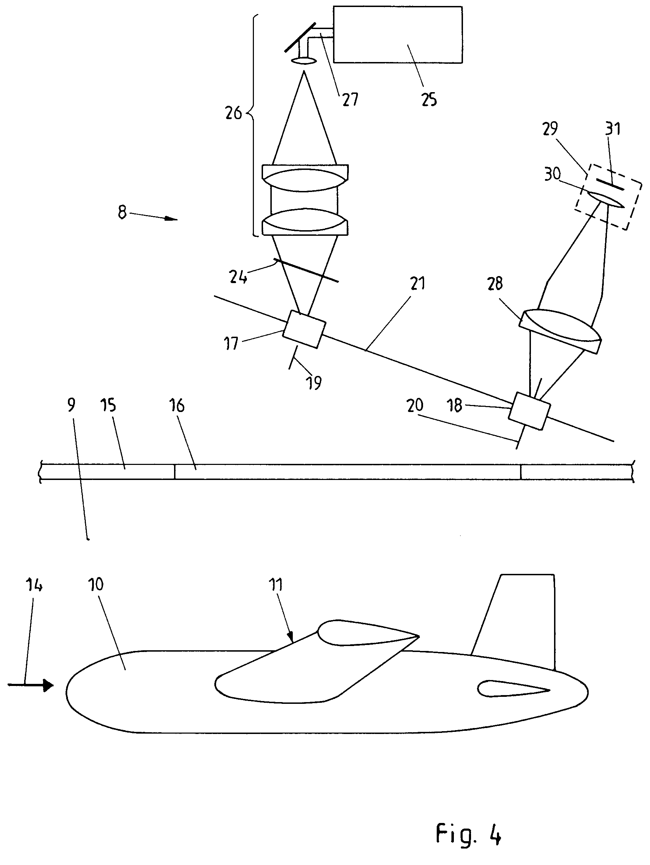

Bei der Verwendung der Moiré-Vorrichtung gemäß Figur 4 kann der zunächst unbekannte Lichtintensitätsuntergrund B(x,y) auf einfache Weise eliminiert werden. Die Moiré-Vorrichtung 8 ist außerhalb eines Windkanals 9 angeordnet, in dem sich ein Modell 10 mit einer zu vermessenden Oberfläche 11 befindet und von einer Strömung in Richtung eines Pfeils 14 angeströmt wird. Der Windkanal 9 wird von einer Wandung 15 begrenzt, die ein lichtdurchlässiges Fenster 16 aufweist. Die Moiré-Vorrichtung 8 weist zwei Objektive 17 und 18 auf, deren optische Achsen 19 und 20 parallel zueinander ausgerichtet sind und die sich in einer Ebene 21 befinden. Über das eine Objektiv 17 wird ein Hellgitter auf die Oberfläche 11 abgebildet. Das Hellgitter wird durch Beleuchten eines Dunkelgitters 24 von hinten erzeugt. Zur Beleuchtung des Dunkelgitters 24 sind ein Laser 25 als Lichtquelle und eine Spiegel- und Linsenanordnung 26 zur Aufbereitung eines aus dem Laser 25 austretenden Laserstrahls 27 vorgesehen. Das Dunkelgitter 24, bei dem es sich um ein Strichgitter gemäß den Figuren 1 und 2 handelt, blendet das von dem Laser 25 kommende Licht bis auf parallele helle Streifen aus, die von dem Objektiv 17 als das Hellgitter auf die Oberfläche 11 projiziert werden. Mit dem Objektiv 18 werden diese hellen Streifen und insbesondere deren Verformung durch die Konturen der Oberfläche 11 beobachtet. Dem Objektiv 18 sind eine Feldlinse 28 und eine Videokamera 29 nachgeschaltet. Die Videokamera 29 weist ihrerseits ein Objektiv 30 und dahinter einen Photosensor 31 sowie eine hier nicht dargestellte Steuerung für den Photosensor 31 auf. Durch die gesamte Optik 18, 28 und 30 wird das Hellgitter 11 auf dem Photosensor 31 abgebildet. Die Feldlinse 28 und das Objektiv 30 dienen hier nur zur Festlegung eines geeigneten Abbildungsmaßstabs. Grundsätzlich kann der Photosensor 31 direkt hinter dem Objektiv 18 angeordnet werden. Im Gegensatz zu einer üblichen Moiré-Vorrichtung befindet sich zwischen der Oberfläche 11 und dem Photosensor 31 kein weiteres Dunkelgitter, das als Referenzgitter verwendet wird. Als Referenzgitter wird vielmehr die Unterteilung des Photosensors 31 in einzelne Bildpunkte ausgenutzt, die auch als Pixel bezeichnet werden.

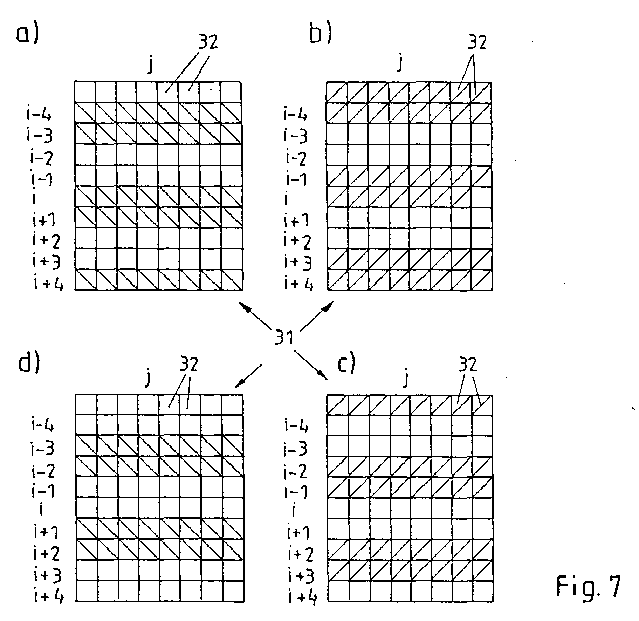

Die Figuren 7 a) bis d) geben Ausschnitte des Photosensors 31 gemäß Figur 4 in Blickrichtung der optischen Achse 20 wieder. Bildpunkte 32 des Photosensors sind so angeordnet, daß sie die gesamte Fläche des Photosensors 31 im wesentlichen abdecken. Die einzelnen Bildpunkte 32 des Photosensors 31 sind jeweils in Zeilen und Spalten angeordnet, wobei die Zeilen mit dem Laufindex i und die Spalten mit dem Laufindex j bezeichnet sind. Weiterhin ist eine zeilenweise Gruppierung der Bildpunkte 32 des Photosensors 31 vorgenommen. Dabei gehören die Bildpunkte 32 der Zeilen i, i-4, i+4, usw. zu einer ersten Gruppe, die Bildpunkte der Zeilen i-3, i+1 zu einer zweiten Gruppe, die Bildpunkte der Zeilen i-2, i+2 zu einer dritten Gruppe und die Bildpunkte der Zeilen i-1, i+3, usw. zu einer vierten Gruppe. Die Gruppen der Bildpunkte sind zu vier verschiedenen Paarungen zusammengefaßt, die in den Abbildungen 7 a) bis 7 d) separat dargestellt sind. Bei den Paarungen sind jeweils zwei Gruppen mit benachbarten Zeilen zusammengefaßt und aktiv, während die verbleibenden zwei Gruppen mit den schraffiert dargestellten Bildpunkten passiv sind. Wenn jetzt die Zeilen des Photosensors 31 parallel zu den hellen Streifen des auf die Oberfläche 11 projizierten Hellgitters angeordnet sind und der Abstand der hellen Streifen doppelt so groß ist wie der Abstand der Zeilen des Photosensors, entsprechen die vier Paarungen in den Figuren 7 a) bis d) vier um jeweils 90° phasenverschobenen Moiré-Aufnahmen. Dabei stehen die schraffierten inaktiven Bildpunkte jeweils für das Referenzgitter. Bereits aus drei phasenverschobenen Moiré-Aufnahmen läßt sich bekannterweise die Kontur einer zu vermessenden Oberfläche vollständig bestimmen. Bei Verwendung der Moiré-Vorrichtung gemäß Figur 4 mit einer Aufteilung des Photosensors 31 gemäß Figur 7 ist die vollständige Bestimmung besonders einfach möglich, weil nicht tatsächlich vier verschiedene Moiré-Aufnahmen gemacht werden müssen. Vielmehr reicht es aus, bei der Auswertung von in einer einzigen Aufnahme mit allen Bildpunkten 32 des Photosensors 31 aufgezeichneten Lichtintensitäten die in den Figuren 7 a) bis d) dargestellte Zuordnung der Zeilen des Photosensors zu einzelnen Gruppen und Paarungen vorzunehmen. Dies bedeutet, daß die den Figuren 7 a) bis d) entsprechenden vier Moiré-Aufnahmen tatsächlich zum selben Zeitpunkt entstehen. Damit ist es erstmals möglich, Konturänderungen der Oberfläche 11 vollständig in Echtzeit zu erfassen. Hierfür ist ein überraschend geringer apparativer Aufwand erforderlich. Um eine ausreichend große Auflösung und ein ausreichend großes Beobachtungsfeld der Moiré-Vorrichtung 8 gemäß Figur 4 zu realisieren, sollte die Anzahl der Bildpunkte 32 des Photosensors 31, der Videokamera 29 sowohl in Zeilen- als auch in Spaltenrichtung möglichst groß sein.

Auch eine Korrektur der registrierten Lichtintensitäten um einen Lichtintensitätsuntergrund ist bei der in Figur 7 gezeigten Anordnung der Bildpunkte 32 in vier paarweise zusammengefaßten Gruppen ohne weiteres möglich. Die Bildpunkte 32 sind zeilenweise zwei Paaren von Gruppen zugeordnet, wobei in Figur 7 a) die schraffiert dargestellten Bildpunkte der Zeilen i-4, i-3, i, i+1, i+4 usw. dem ersten Gruppenpaar zugeordnet sind, während die Bildpunkte der Zeilen i-2, i-1, i+2, i+3 usw. dem zweiten Gruppenpaar zugeordnet sind. Wenn bei dieser Zuordnung die Zeilen des Photosensors 31 parallel zu den hellen Streifen des auf die Oberfläche 11 gemäß Figur 4 aufprojizierten Hellgitters ausgerichtet werden, wobei der Abbildungsmaßstab der Optik 18, 28, 30 so groß gewählt ist, daß der Abstand der hellen Streifen des Hellgitters dem vierfachen Abstand der Zeilen des Photosensors 31 entspricht, stehen die Lichtintensitäten der Bildpunkte 32 in den Zeilen i-4, i-3, i, i+1, i+4 usw. für eine erste Moiré-Aufnahme, während die Lichtintensitäten in den Zeilen i-2, i-1, i+2, i+3 usw. für eine zweite Moiré-Aufnahme stehen (Figur 7 c)). Unter der Annahme, daß $I_o$ bei der weiter oben aufgeführten Gleichung konstant ist, können die Lichtintensitäten $I_1$ der Bildpunkte der Zeilen i-4, i-3, i, i+1, i+4 usw. unter Verwendung der Lichtintensitäten $I_2$ der Bildpunkte der Zeilen i-2, i-1, i+2, i+3 usw. gemäß der nachstehenden Gleichung $I_z$ korrigiert werden, so daß der Einfluß des Lichtintensitätsuntergrunds B entfällt:

$$I_{1k}(i,j) = 1/4 * (2\ I_1(i,j) - I_2(i-u,j) - I_2(i+u,j)$$
$$= I_{1o}(i,j)\ triang[N(i,j)] \qquad (I_z),$$

wobei der Wert von u, d.h. der Wert des Abzug von bzw. des Zuschlag zu dem Laufindex i, um in die nächste Zeile des anderen Gruppenpaars zu gelangen, nicht konstant ist, sondern in der einen Richtung 1 und in der jeweils anderen Richtung 2 beträgt. Die Lichtintensitäten $I_{1k}$ sind damit unmittelbar einer Auswertung zuführbar.

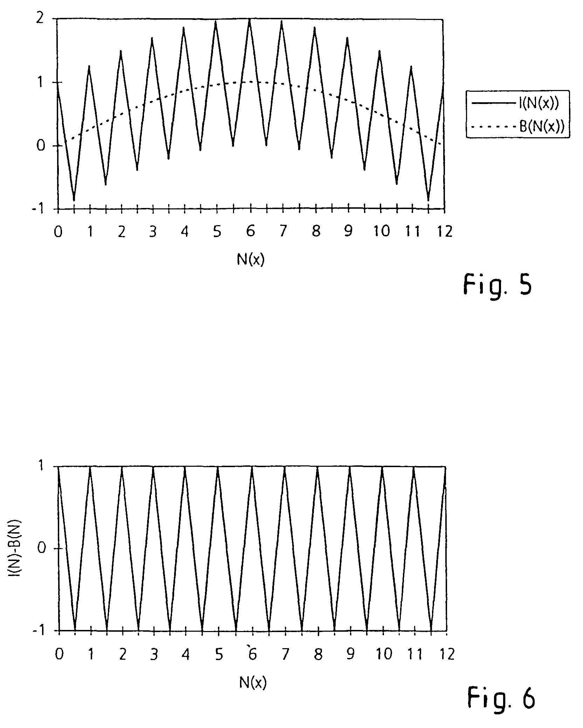

Figur 5 gibt in durchgezogener Linie und relativen Einheiten den Verlauf einer unkorrigierten Lichtintensität wieder, wie sie $I_1$ entspricht. In gestrichelter Linie ist dabei der Lichtintensitätsuntergrund B eingezeichnet. Figur 6 gibt demgegenüber den korrigierten Wert $I_k = I-B$ wieder, wie er sich nach der Korrektur gemäß der obigen Gleichung $I_z$ ergibt. Die Ausrichtung des Photosensors 31 mit seinen Zeilen i parallel zu den hellen Streifen des Hellgitters auf der Oberfläche 11, wie sie im Zusammenhang mit Figur 8 erläutert wurde, ist bei der Auswertung der Lichtintensitäten besonders vorteilhaft, weil ein typischer Photosensor einer Videokamera zeilenweise ausgelesen wird.

**BEZUGSZEICHENLISTE**

| | |
|---|---|
| 1 - | Strichgitter |
| 2 - | heller Streifen |
| 3 - | dunkler Streifen |
| 4 - | Strichgitter |
| 5 - | Interferenzmuster |
| 6 - | dunkler Bereich |
| 7 - | heller Bereich |
| 8 - | Moiré-Vorrichtung |
| 9 - | Windkanal |
| 10 - | Modell |
| 11 - | Oberfläche |
| 12 - | Breite |
| 13 - | Breite |
| 14 - | Pfeil |
| 15 - | Wandung |
| 16 - | Fenster |
| 17 - | Objektiv |
| 18 - | Objektiv |
| 19 - | optische Achse |
| 20 - | optische Achse |
| 21 - | Ebene |
| 22 - | Abstand |
| 23 - | Abstand |
| 24 - | Dunkelgitter |
| 25 - | Laser (lichtquelle) |
| 26 - | Spiegel- und Linsenanordnung |
| 27 - | Laserstrahl |
| 28 - | Feldlinse |
| 29 - | Videokamera |
| 30 - | Objektiv |
| 18,28,30 - | Optik |
| 31 - | Photosensor |
| 32 - | Bildpunkte |

**Patentansprüche**

1. Moiré-Verfahren zum Vermessen einer Oberfläche, bei dem ein periodisches Hellgitter aus beabstandeten und parallel zueinander verlaufenden hellen Streifen auf die Oberfläche projiziert wird und bei dem das auf die Oberfläche projizierte Hellgitter unter einem Abbildungsmaßstab ohne Zwischenordnung eines körperlich vorhandenen Dunkelgitters auf einen Photosensor abgebildet wird, der in in Zeilen und Spalten angeordnete Bildpunkte aufgeteilt ist, wobei die Streifen des Hellgitters parallel zu den Zeilen oder Spalten des Photosensors ausgerichtet werden, **dadurch gekennzeichnet,** daß der Abbildungsmaßstab so gewählt wird, daß der Abstand der Streifen (22) des auf den Photosensor (31) abgebildeten Hellgitters gleich groß ist wie ein 4-facher Abstand der Zeilen (i) bzw. Spalten (j).

2. Verfahren nach Anspruch 1, **dadurch gekennzeichnet**, daß die Bildpunkte (32) des Photosensors (31) in zwei äquivalente Gruppen aufgeteilt werden, wobei die Bildpunkte (32) jeder Gruppe in beabstandeten und parallel zueinander verlaufenden Zeilen (i) bzw. Spalten (j) angeordnet sind, und daß die in den Bildpunkten (32) der einen Gruppe registrierten Lichtintensitäten $I_{1(i,j)}$ gemäß der nachstehenden Gleichung ($I_z$) bzw. ($I_s$) in bezüglich eines Lichtintensitätsuntergrunds (B) korrigierten Wert $I_{1k(i,j)}$ umgerechnet werden:

$$I_{1k}(i,j) = 1/4 * (2 I_1(i,j) - I_2(i-u,j) - I_2(i+u,j)) \quad (I_z),$$

bzw.

$$I_{1k}(i,j) = 1/4 * (2 I_1(i,j) - I_2(i,j-u) - I_2(i,j+u)) \quad (I_s),$$

wobei $I_2(i-u,j)$ und $I_2(i+u,j)$ bzw. $I_2(i,j-u)$ und $I_2(i,j+u)$ die in der benachbarten Zeile (i) bzw. Spalte (j) der anderen Gruppe registrierten Lichtintensitäten sind.

3. Verfahren nach Anspruch 1, **dadurch gekennzeichnet**, daß die Bildpunkte (32) des Photosensors (31) in vier äquivalente Gruppen aufgeteilt werden, wobei die Bildpunkte (32) jeder Gruppe in beabstandeten und parallel zueinander verlaufenden Zeilen (i) bzw. Spalten (j) angeordnet sind, und daß die in den Bildpunkten registrierten Lichtintensitäten (I) bei der Auswertung zu vier verschiedenen Paarungen von Gruppen mit benachbarten Zeilen (i) bzw. Spalten (j) zusammengefaßt werden.

4. Verfahren nach einem der Ansprüche 1 bis 3, **dadurch gekennzeichnet**, daß die Streifen des Hellgitters parallel zu den Zeilen (i) des Photosensors (32) ausgerichtet werden.

5. Moiré-Vorrichtung zum Vermessen einer Oberfläche gemäß dem Verfahren nach einem der Ansprüche 1 bis 4, mit einer Lichtquelle zum Beleuchten eines Dunkelgitters, das von der Lichtquelle kommendes Licht bis auf ein periodisches Hellgitter aus beabstandeten und parallel zueinander verlaufenden hellen Streifen ausblendet, mit einer ersten Optik, die das Hellgitter auf die Oberfläche projiziert, und mit einer zweiten Optik, die das auf die Oberfläche projizierte Hellgitter unter einem Abbildungsmaßstab auf einen Photosensor abbildet, der in in Zeilen und Spalten angeordnete Bildpunkte aufgeteilt ist, wobei zwischen der Oberfläche und dem Photosensor kein körperlich vorhandenes weiteres Dunkelgitters angeordnet ist und wobei die Streifen des Hellgitters parallel zu den Zeilen oder Spalten des Photosensors ausgerichtet sind, **dadurch gekennzeichnet**, daß der Abbildungsmaßstab so groß ist, daß der Abstand der Streifen (22) des auf den Photosensor (31) abgebildeten Hellgitters gleich groß ist wie ein 4-facher Abstand der Zeilen (i) bzw. Spalten (j).

6. Vorrichtung nach Anspruch 5, **dadurch gekennzeichnet**, daß die Streifen des Hellgitters parallel zu den Zeilen (i) des Photosensors (31) einer Videokamera (29) ausgerichtet sind.

Fig.1

Fig.2

Fig.3

Fig. 4

Fig. 5

Fig. 6

Fig. 7